# EUROPEAN PATENT APPLICATION

(11) **EP 2 607 174 A1**
(43) Date of publication of application: **26.06.2013**
(21) Application number: 12198379.5
(22) Date of filing: 20.12.2012
(51) Int. Cl.: B60R 7/02

(54) **Utility Receptacle for Vehicles**

(30) Priority: 21.12.2011 AU 2011101677
(71) Applicant: Saltash Pty Ltd, Oxenford, Queensland 4210 (AU)
(72) Inventor: Tirrell, Robert James, Oxenford Queensland 4210 (AU)
(74) Representative: Lawrence, John

(57) **Abstract**

A collapsible receptacle of approximately cubic shape with two or more attachments to fixing points inside a vehicle for holding the receptacle erect in the rear of the vehicle in which the rear wall folds down over the rear bumper of the vehicle to allow loading and closes off the receptacle when loaded. An alternative embodiment fits inside the boot of a vehicle and is held erect by attachment to the roof of the boot and has rear top and side flaps which open for loading and close to secure the load.

## Description

### FIELD OF INVENTION

This invention relates to receptacles for installation in the rear compartment of a vehicle and in particular to a receptacle for installation in the rear compartment of a vehicle with a rear door in order to transport rubbish and the like without damaging the interior of the vehicle.

### BACKGROUND OF THE INVENTION

It should be noted that reference to the prior art herein is not to be taken as an acknowledgement that such prior art constitutes common general knowledge in the art.

Owners of passenger vehicles often need to transport rubbish such as garden clippings and household waste. Typically they will drape a sheet of material over the rear compartment of the vehicle and over the rear stowed seats. Furthermore, to maintain a clean interior within a vehicle when transporting items such as lumber, sand, gravel or small shrubs, for example, a protective device may be placed in the cargo area to protect the interior of the vehicle. The various items are placed within an enclosure of the protective device so that the interior is not damaged or soiled.

However this only provides limited protection to the floor of the vehicle and the sides and roof are often damaged.

Clearly it would be advantageous if a utility receptacle for vehicles could be devised that helped to at least ameliorate some of the shortcomings described above. In particular, it would be beneficial to provide a utility receptacle for vehicles which in use protects the interior of the vehicle from damage or which at least provides an internal lining for the rear of the vehicle.

### STATEMENT OF THE INVENTION

In accordance with a first aspect, the present invention provides a collapsible receptacle of approximately cubic shape having two or more attachments to fixing points inside a vehicle for holding the receptacle erect in the rear of the vehicle and in which the rear wall folds down over a rear bumper of the vehicle to allow loading and closes off the receptacle when loaded.

Preferably, the attachments may fix to rear door struts of the vehicle. Alternatively, the attachments may fix to the roof of the vehicle or the attachments fix to the front passenger seats of the vehicle.

Preferably, the rear wall may be fixed to attachment points at the rear of the receptacle when the rear wall is in a closed position. The rear attachment points may comprise hooks and complementary loops on the rear wall of the receptacle for securing the rear wall in the closed position.

In accordance with a further aspect, the present invention provides an enclosed collapsible receptacle which fits inside the boot of a vehicle and is held erect by attachment to the roof of the boot and has rear top and side flaps which open for loading and close to secure the load.

Preferably, the collapsible receptacle may further comprise attachments which are fixed to rear door or boot struts of the vehicle so that the rear top flap opens with the opening of the rear door or boot.

Preferably, the attachment to the roof of the boot may comprise at least one magnet secured to the top of the receptacle to magnetically attach the roof of the receptacle to the roof of the boot of the vehicle.

In accordance with a still further aspect, the present invention provides an enclosed protective device for a cargo area of a vehicle comprising doors, front and rear seats, a roof and a rear opening or door, the protective device comprising: a collapsible receptacle of approximate cubic shape; at least two attachments to fixing points on the vehicle for holding the receptacle erect in the rear of the vehicle; at least two attachments to the rear of the receptacle fixed to rear door struts of the vehicle; at least two attachments at the front of the receptacle for fixing a front of the receptacle to the front seats of the vehicle; and a fold down rear wall which folds down over a rear bumper of the vehicle to allow loading and closes off the receptacle when loaded.

Preferably, the at least two attachments to the rear of the receptacle may comprise adjustable straps which can be adjusted to suit the dimensions of the rear of the vehicle.

Preferably, the at least two attachment to fixing points on the vehicle for holding the receptacle erect in the rear of the vehicle may comprise at least two adjustable attachments which pass through handles located on the roof of the vehicle.

Preferably, all attachments may comprise straps of adjustable length with at least one fastener located on an end of the strap. The at least one fastener may comprise a hook and loop fastener.

Preferably, the protective device may be formed from a durable synthetic material.

### BRIEF DESCRIPTION OF THE DRAWINGS

Figure 1 is a perspective view of a utility receptacle;
Figure 2 shows the receptacle of Figure 1 installed in a vehicle;
Figure 3 is another view of the receptacle of Figure 1 installed in a vehicle;
Figure 4 shows a strap fixing the receptacle to a rear door strut;
Figure 5 shows straps fixing the receptacle to a front seat head rest and a rear seat passenger handle;
Figure 6 is a perspective view of a receptacle for the boot of a vehicle; and
Figure 7 shows the receptacle of Figure 6 installed in the boot of a vehicle.

### DETAILED DESCRIPTION OF THE INVENTION

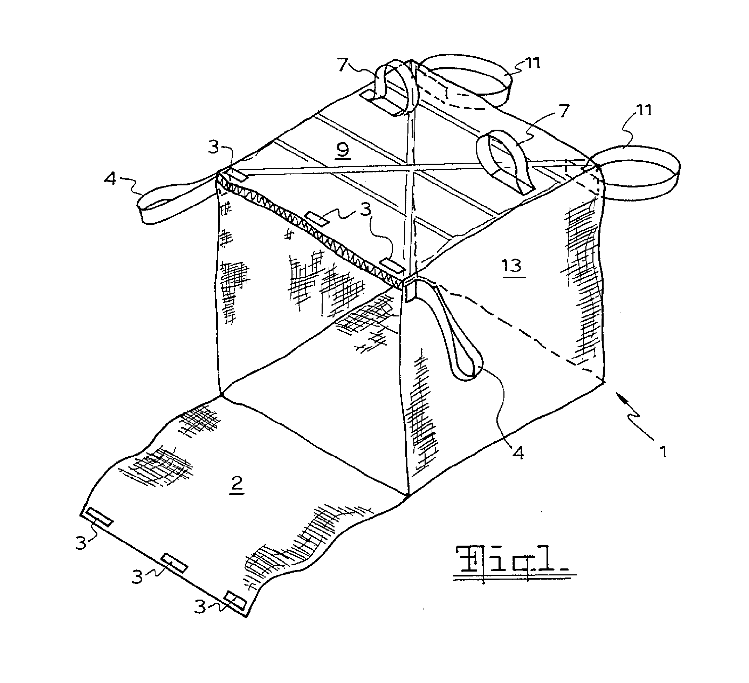

In its simplest embodiment receptacle 1 of the present invention is formed from a durable synthetic material in the approximate shape of a hollow cube as shown in Figure 1. Rear wall 2 of receptacle 1 opens to provide access and is closed by connecting Velcro strips 3 located on the rear wall 2 and the roof 9 to enclose the contents.

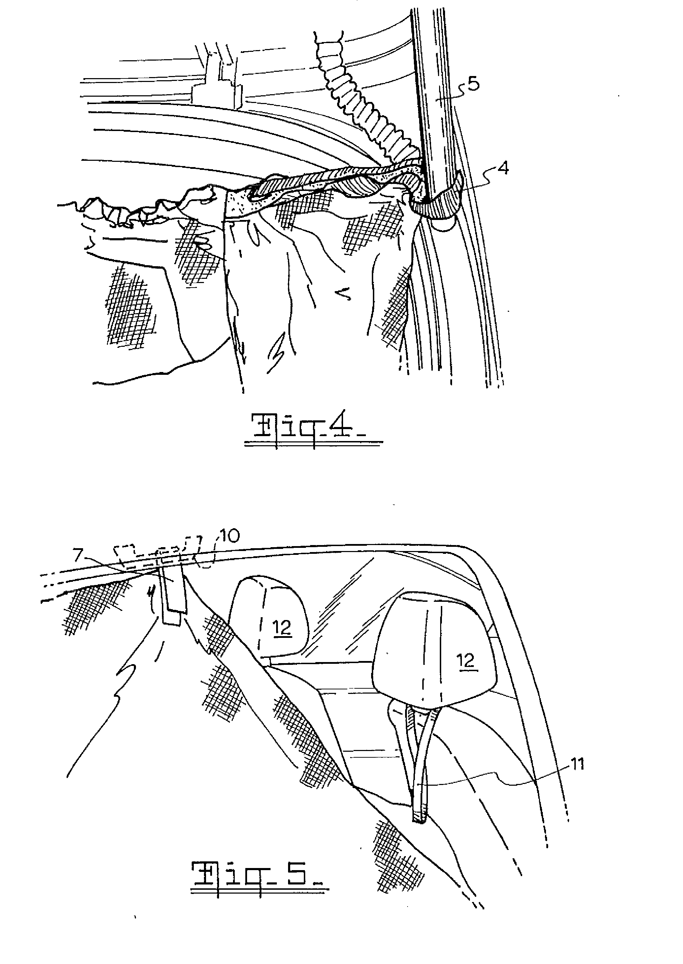

As shown in Figure 4, straps 4 hold rear wall of receptacle 1 open by wrapping around struts 5 of rear door 6 of the vehicle. Straps 7 secure roof 9 to rear passenger handles 10 and straps 11 fit over headrests 12 of the front seats of the vehicle to secure front wall 13 to maintain receptacle 1 erect for loading as shown in Figure 5. In order for the straps 7 to pass through the rear passenger handles 10 the straps have a fastener on an end of the strap 7 and another complementary fastener located a distance spaced from the end of the strap 7 such that it can be opened to pass through the handle 10 and closed to secure the strap 7 to the handle 10. For example, a hook and loop fastener such as Velcro is attached to the end of the strap 7 and at a distance spaced from the end of the strap 7. Straps 4 like straps 7 have a fastener in the form of Velcro for allowing the end of the strap 4 to be opened and closed around the strut 5 of the rear door 6.

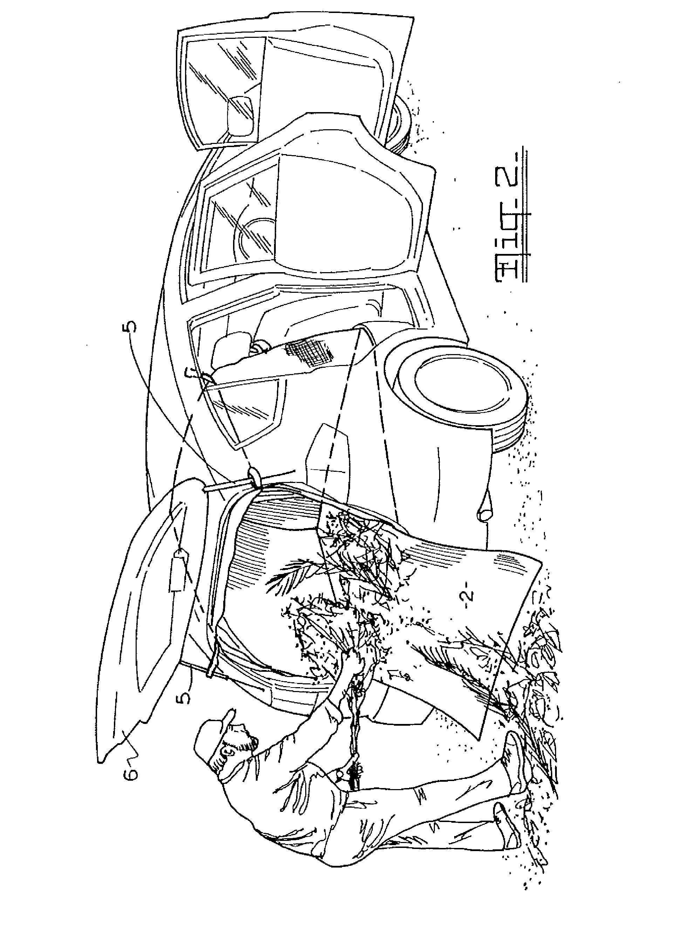

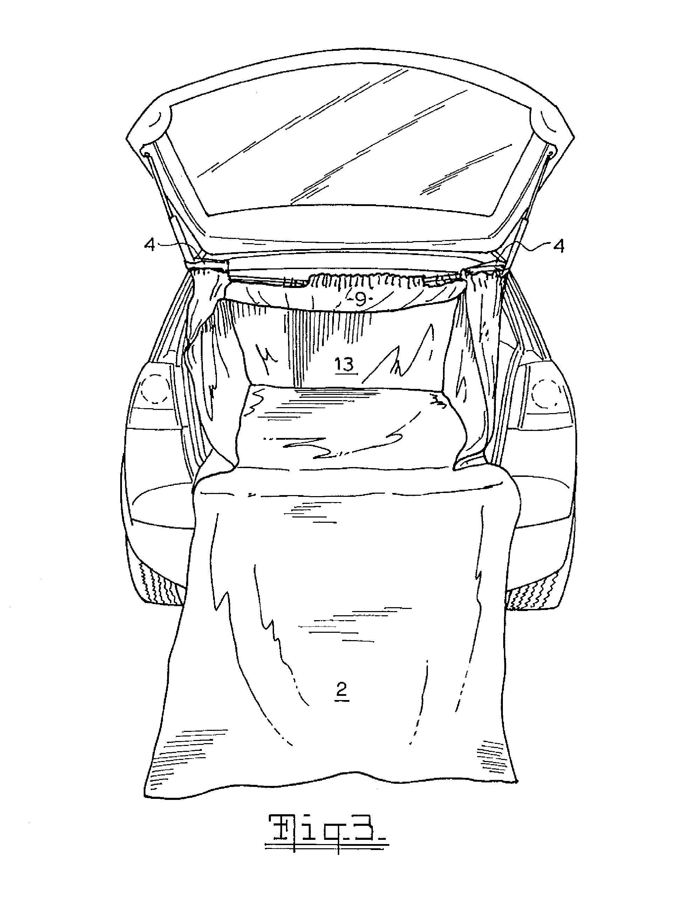

Figures 2 and 3 shows receptacle 1 installed in the rear of a vehicle with rear seats stowed. In use the rear wall 2 is draped over the rear of the vehicle to protect the rear bumper during loading. When loading is complete wall 2 is raised to enclose the contents of the receptacle 1 and secured by Velcro strips 3. The Velcro strips 3 are attached to an outer edge of the wall 2 and a corresponding outer edge of the roof 9 to enclose the contents of the receptacle 1.

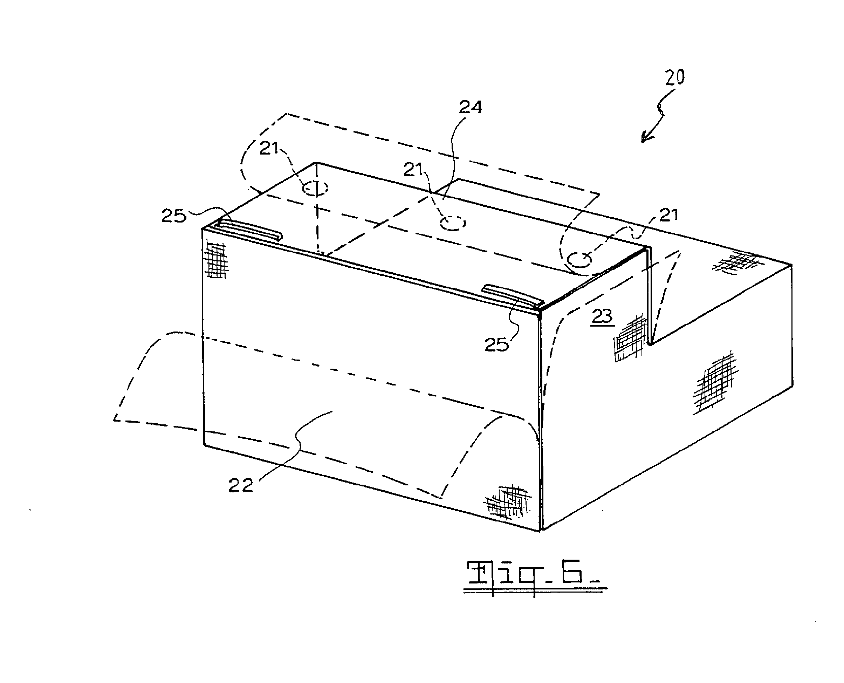

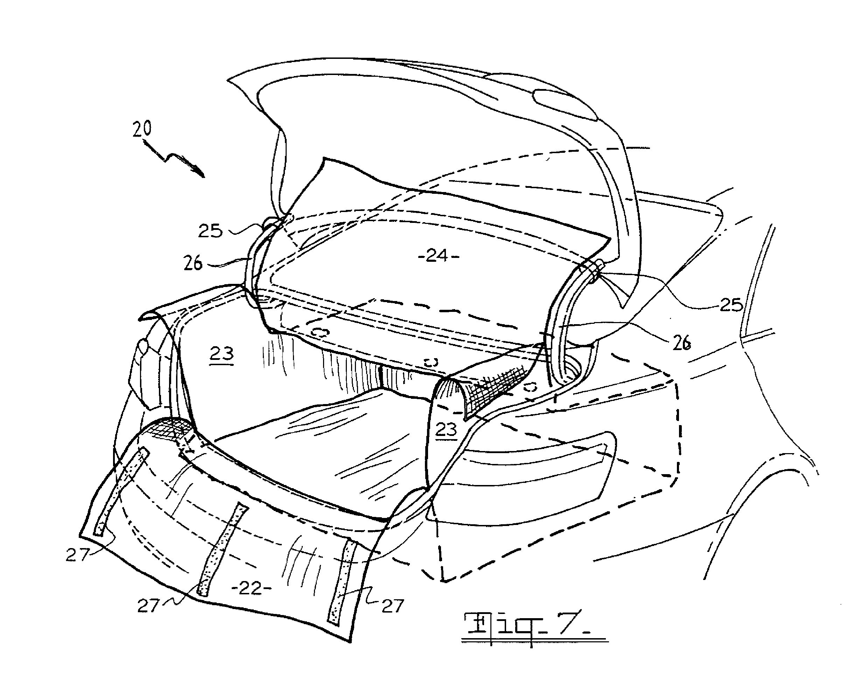

Figure 6 illustrates an alternative receptacle 20 designed to fit into the boot of a sedan vehicle as shown in Figure 7. Magnets 21 secure the top of receptacle 20 to the roof of the boot and rear wall 22 and side flaps 23 open to allow loading.

Top flap 24 has straps 25 which wrap around struts 26 of the boot so that flap 24 automatically opens with the boot. When loaded, side flaps 23 are folded inwards and rear wall 22 is raised and secured over side flaps 23 by Velcro strips 27.

It will be obvious that receptacles 1 and 20 can be made in different shapes and sizes to fit vehicles from small hatchbacks to large vans. However there is sufficient flexibility in the receptacles 1 and 20 so that a limited number of different sizes can be manufactured which will fit a wide range of vehicles.

### ADVANTAGES

The present invention allows owners of passenger vehicles who often need to transport rubbish such as garden clippings and household waste with a receptacle which fits snugly within the cargo area or the boot and provides protection not only to the floor of the cargo area but also to the walls and roof of the cargo area of a vehicle. The present invention also provides the added advantage that a clean interior within the vehicle is maintained by enclosing the cargo area with the receptacle of the present invention. The present invention is easily installed into the cargo area or boot of a passenger vehicle and is easily secured with various attachment straps and loops. Various items are placed within an enclosure of the protective device so that the interior is not damaged or soiled.

### VARIATIONS

It will be realized that the foregoing has been given by way of illustrative example only and that all other modifications and variations as would be apparent to persons skilled in the art are deemed to fall within the broad scope and ambit of the invention as herein set forth. For example different restraining straps and fixings could be used without departing from the inventive concept.

Throughout the description and claims to this specification the word "comprise" and variation of that word such as "comprises " and "comprising" are not intended to exclude other additives components integers or steps.

## Claims

1. A collapsible receptacle of approximately cubic shape having two or more attachments to fixing points inside a vehicle for holding the receptacle erect in the rear of the vehicle and in which the rear wall folds down over a rear bumper of the vehicle to allow loading and closes off the receptacle when loaded.

2. A receptacle as claimed in claim 1, in which the attachments fix to rear door struts of the vehicle.

3. A receptacle as claimed in claim 1 or claim 2, in which the attachments fix to the roof of the vehicle.

4. A receptacle as claimed in any one of claims 1 to 3, in which the attachments fix to the front passenger seats of the vehicle.

5. A receptacle as claimed in claim 1, wherein the rear wall is fixed to attachment points at the rear of the receptacle when the rear wall is in a closed position.

6. A receptacle as claimed in claim 5, wherein the rear attachment points comprise hooks and complementary loops on the rear wall of the receptacle for securing the rear wall in the closed position.

7. An enclosed collapsible receptacle which fits inside the boot of a vehicle and is held erect by attachment to the roof of the boot and has rear top and side flaps which open for loading and close to secure the load.

8. An enclosed collapsible receptacle as claimed in claim 7, further comprising attachments which are fixed to rear door or boot struts of the vehicle so that the rear top flap opens with the opening of the rear door or boot.

9. An enclosed collapsible receptacle as claimed in claim 7 or claim 8, wherein the attachment to the roof of the boot comprises at least one magnet secured to the top of the receptacle to magnetically attach the roof of the receptacle to the roof of the boot of the vehicle.

10. An enclosed protective device for a cargo area of a vehicle comprising doors, front and rear seats, a roof and a rear opening or door, the protective device comprising:
a collapsible receptacle of approximate cubic shape;
at least two attachments to fixing points on the roof of the vehicle for holding the receptacle erect in the rear of the vehicle;
at least two attachments to the rear of the receptacle fixed to rear door struts of the vehicle;
at least two attachments at the front of the receptacle for fixing a front of the receptacle to the front seats of the vehicle; and
a fold down rear wall which folds down over a rear bumper of the vehicle to allow loading and closes off the receptacle when loaded.

11. An enclosed protective device as claimed in claim 10, wherein said at least two attachments to the rear of the receptacle comprise adjustable straps which can be adjusted to suit the dimensions of the rear of the vehicle.

12. An enclosed protective device as claimed in claim 10 or claim 11, wherein said at least two attachment to fixing points on the vehicle for holding the receptacle erect in the rear of the vehicle comprise at least two adjustable attachments which pass through handles mounted on the roof of the vehicle.

13. An enclosed protective device as claimed in any one of claims 10 to 12, wherein all attachments comprise straps of adjustable length with at least one fastener located on an end of the strap.

14. An enclosed protective device as claimed in claim 13, wherein said at least one fastener comprises a hook and loop fastener.

15. An enclosed protective device as claimed in any one of claims 10 to 14, wherein said protective device is formed from a durable synthetic material.
